# EUROPEAN PATENT SPECIFICATION

(11) **EP 2 821 454 B1**
(45) Date of publication and mention of the grant of the patent: **29.03.2017**
(21) Application number: 14002277.3
(22) Date of filing: 02.07.2014
(51) Int. Cl.: C09J 167/06, C08L 67/06

(54) **UNSATURATED PHOTO-CURABLE BIO-BASED ADHESIVE COMPOSITION**
UNGESÄTTIGTE LICHTHÄRTBARE KLEBSTOFFZUSAMMENSETZUNG AUF BIOLOGISCHER BASIS
COMPOSITION ADHÉSIVE À BASE BIOLOGIQUE PHOTODURCISSABLE NON SATURÉE

(30) Priority: 02.07.2013 EP 13003351
(43) Date of publication of application: 07.01.2015
(73) Proprietor: NITTO EUROPE N.V, 3600 Genk (BE); Nitto Denko Corporation, Ibaraki-shi, Osaka 567-8680 (JP)
(72) Inventor: Vendamme, Richard, 3600 Genk (BE)
(74) Representative: Grünecker Patent- und Rechtsanwälte PartG mbB

(56) References cited:
- EP-A1- 2 567 996
- GB-A- 2 014 170
- US-A- 3 925 272
- US-A1- 2010 006 217

## Description

### FIELD OF THE INVENTION

The present invention is directed a composition for the preparation of a pressure-sensitive adhesive, the composition comprising an unsaturated polycondensate comprising a component with at least one carbon-carbon double bond and at least two carboxylic acid groups or the respective diester derivatives, preferably itaconic acid or an itaconic acid diester, in combination with a diol or a dimer of a fatty alcohol, or a mixture thereof and a diacid monomer different from the first mentioned component; and a component chosen from a tackifying resin and/or a low-Tg polyester polyol, and/or a plasticizer; wherein the unsaturated polycondensate is capable of being cured via a radical mechanism.

The invention is also directed at a pressure-sensitive adhesive comprising said composition, at a method for preparing the adhesive and at the use of the pressure-sensitive adhesive for laminating a sheet or a film.

### BACKGROUND OF THE INVENTION

Adhesives are compounds in a liquid or semi-liquid state that can adhere or bond items together. Adhesives are usually derived from fossil fuel, i.e. non-renewable resources. Because of rising oil prices and environmental concerns, there is an increased demand for bio-based materials. Bio-based materials prepared by the polycondensation of plant-derived dicarboxylic acids and plant-derived diols have been employed in adhesive products because of their good technical properties and their sustainability as a renewable resource.

Among the dicarboxylic acids used for such applications, itaconic acid represents a promising industrial building block since it is a non-toxic, naturally occurring and readily biodegradable compound, which may be produced by fermentation of carbohydrates such as glucose. It is primarily used as a co-monomer in the coating industry, e.g. in powder coatings (see e.g. Patent Documents 1 and 2).

In pressure-sensitive adhesive (PSA) applications, itaconic acid is mainly used as a co-monomer to form polymers having polyamide or polyacrylate backbones (see e.g. Patent Documents 3 and 4).

Patent Document 5 proposes surface-protecting PSA sheets produced by using plant derived raw material. In particular, the disclosed PSA composition is made from a polyester comprising at least a lactic acid unit, a dibasic acid unit (e.g. itaconic acid) and a glycol unit. Similarly, Patent Document 6 discloses pressure-sensitive adhesives containing a polyester resin as a main component. The polyesters to be used are formed by condensation of one or two or more compounds selected from polycarboxylic acids having at least two carboxyl groups in one molecule and their derivatives with one or two or more compound(s) selected from polyalcohols having at least two hydroxyl groups in one molecule. In the disclosures of Patent Documents 5 and 6, cross-linking of the polyesters is effected by using polyfunctional isocyanates.

The preparation of the PSA sheets in accordance with the cited Patent Documents 3 to 6 is disadvantageous in that it requires substantial amounts of organic solvents, either in the initial polymerization step or in the cross-linking step if the initial polymerization reaction is a polycondensation, thus resulting in high VOC (volatile organic compound) emissions.

Patent Document 7 relates to a solvent-free, reactive composition comprising a polymer which is capable of reacting under UV-radiation using a photoinitiator, wherein the polymer contains at least one in-chain olefinically unsaturated group and may be a reaction product between i) an unsaturated dicarboxylic acid and ii) at least one polyol, polyamine and/or polythiol and iii) optionally at least one saturated or aromatic dicarboxylic acid, saturated or aromatic dicarboxylic ester and/or saturated or aromatic dicarboxylic anhydride.

In Patent Document 8, a radiation crosslinkable water-dispersible adhesive composition usable as a hot melt adhesive is disclosed. The water-dispersible adhesive composition comprises a branched water-dispersible radiation crosslinkable polyester composition made of six components including a difunctional dicarboxylic acid, at least one difunctional sulfomonomer, at least one diol or a mixture of diol and diamine, a difunctional monomer reactant, a multifunctional reactant containing at least three functional groups; and an unsaturated mono- or dicarboxylic acid. Furthermore, polycondensation processes leading to the uncured and unsaturated polyesters are disclosed, which are also cured via UV-radiation.

However, the compositions disclosed in Patent Documents 7 and 8 are disadvantageous in terms of sustainability due to the use of non-renewable resources.

In view of the above, the problem underlying the present invention is to provide a bio-based, environmentally friendly adhesive composition exhibiting good adhesive characteristics. Furthermore, it is an objective of the present invention to provide an adhesive with a high optical transparency.

In Patent Document 9, bio-based adhesive compositions prepared by polycondensation reaction of fat-based compounds with specific furan derivatives are disclosed. Patent Document 10 discloses hot-melt adhesive compositions comprising a self-curing polyester resin. Patent Document 11 discloses a composite elastomer composition comprising a plasticizer and an unsaturated polyester obtained from a saturated dicarboxylic acid, a diol and an unsaturated dicarboxylic acid.

### REFERENCES

Patent Document 1: PCT Patent Application No. WO 97/27253 A1
Patent Document 2: PCT Patent Application No. WO 2010/108965 A1
Patent Document 3: US Patent Application No. US 3 299 010 A
Patent Document 4: US Patent Application No. US 3 989 609 A
Patent Document 5: US Patent Application No. US 2012/0202058 A1
Patent Document 6: US Patent Application No. US 2012/0244328 A1
Patent Document 7: US Patent Application No. US 2010/0006217 A1
Patent Document 8: US Patent Application No. US 5 780 151 A
Patent Document 9: European Patent Application Pub. No. EP 2 567 996 A1
Patent Document 10: UK Patent Application Pub. No. GB 2 104 170 A
Patent Document 11: US Patent Application No. US 3 925 272 A

### DISCLOSURE OF THE INVENTION

The present inventors surprisingly found that the abovementioned problems are solved by the present invention, which essentially provides a composition for the preparation of a pressure-sensitive adhesive as defined in claims 1 and 7. Preferred embodiments are defined in claims 2 to 6, 8, 9 as well as in the following. Further the present invention provides the pressure-sensitive adhesive as defined in any one of claims 10 to 13 as well as the process and use as defined in any one of claims 14 and 15. One important feature of the present invention is component a1), which is an organic molecule with at least one carbon-carbon double bond and at least two carboxylic acid groups or ester derivatives thereof, preferred examples of which are described in the following. The presence of the at least one carbon-carbon double bond ensures that a functionality is present which does not interfere with the condensation reaction but which provides a functionality able to enable modification by means of a radical reaction. Thereby desired properties may be tuned, such as adhesive properties, cohesive properties etc. Preferably, the component a1) comprises one or two, most preferably only one carbon-carbon double bond. The carbon-carbon double bond may be a vinylic double bond (-CH=CH₂), an alkenylic double bond (-CH=CH-) or even a group where one of the carbon atoms does not show a bond to a hydrogen atom (>C=CH₂). Further, component a1) has at least two carboxylic acid groups, or ester derivatives thereof. Preferred are components with 2, 3, or 4 such groups, in particular 2 or 3, most preferably 2. These groups allow to incorporate the desired carbon-carbon double bond into the condensation product by means of an esterification condensation process of the acid groups with the -OH group containing starting products. Preferably the component a1) has from 4 to 15 carbon atoms, more preferable from 4 to 8 carbon atoms. Specific examples are itaconic acid and/or citraconic acid and/or mesaconic acid and/or aconitic acid, and/or their respective dialkyl esters. Particularly preferred are embodiments wherein a1) at least comprises itaconic acid or its diester derivatives.

In one embodiment, a2) is a diol and a3) is a dimer of a fatty acid.

In one embodiment, a1) is selected among itaconic acid and/or citraconic acid and/or mesaconic acid and/or aconitic acid, and/or their respective dialkyl esters, as well as any mixture thereof and/or a2) further contains a diol monomer and/or a polyol, and/or a3) further contains a dimer of a fatty acid and/or a dialkylester of a dimer of a fatty acid.

The composition may further comprise a low molecular weight reactive diluent capable of participating in a curing reaction via a radical mechanism.

In a preferred embodiment, the dimer of a fatty alcohol is obtained by hydrogenation of a dimer of a fatty acid.

In one embodiment, the fatty acid used to form the dimer of a fatty acid or its dialkylester is a linoleic, linolenic stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid, and/or mixtures thereof; wherein the alkyl group in the dialkylester has from 1 to 24 carbon atoms. The dialkylester may likewise be triglyceride.

In preferred embodiments, the concentration of component a) is from 20 to 95 wt% based on the composition and/or the concentration of component b) is from 5 to 80 wt% based on the total weight of the composition.

In one embodiment, the polycondensate has a glass transition temperature (Tg) of from -50°C to 0°C.

The present invention further provides a pressure-sensitive adhesive comprising the composition described above, wherein the composition has been preferably at least partly cured via a radical mechanism. In one embodiment, the adhesive exhibits a glass transition temperature (Tg) of from -50°C to 0°C. In a further embodiment, the adhesive has an adhesion force of from 20 cN/20mm to 2000 cN/20mm on steel at room temperature.

The present invention further provides a method for preparing a pressure-sensitive adhesive, comprising mixing components a) and b), and optionally at least partly curing the obtained mixture via a radical mechanism.

The present invention is also directed at the use of the above-defined pressure-sensitive adhesive for laminating a sheet or a film.

### EFFECT OF THE INVENTION

The compositions and adhesives in accordance with the present invention exhibit a tunable adhesion level and a high level of transparency. Hence, they are suitable for a wide range of potential applications. Moreover, since most of the building blocks of the claimed composition may be derived from renewable resources (including itaconic acid) and the VOC emissions and as well as the carbon footprint in production and use of the adhesives are low, the compositions and adhesives in accordance with the present invention are especially environment-friendly.

### BEST MODE OF CARRYING OUT THE INVENTION

The terms "reactive" and "non-reactive", as used herein, refer to the capability of a compound or component of actively participating in the curing reaction via a radical mechanism.

According to the present invention, the component a2) essentially comprises a diol or a dimer of a fatty alcohol, or a mixture thereof.

The term "dimer of a fatty alcohol", as used herein, refers to the dimerisation product of saturated or mono- or polyunsaturated fatty alcohols. The resulting dimer is typically a saturated compound having two terminal OH-groups allowing a reaction with the other components defined herein. The saturated hydrocarbon part of the dimer may be straight chain or branched, and if branched it preferable is a symmetrical molecule. Suitable examples of such dimers are commercially available, in particular dimmers with in total 36 carbon atoms, and are sold under the trade names mentioned below. In a preferred embodiment, in combination with any of the above or below embodiments, the fatty alcohol has from 14 to 22 carbon atoms, i.e. 14, 15, 16, 17, 18, 19, 20, 21 or 22 carbon atoms.

In another preferred embodiment, in combination with any of the above or below embodiments, the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty alcohol are commercially available for example from CRODA (trade name PRIPOL 2033) or OLEON (trade name RADIANOL 1990). Both PRIPOL 2033 and RADIANOL 1990 are high-purity, fully hydrogenated, and distilled aliphatic dimer alcohols. These products appear as colorless, clear viscous liquids. Their properties can be summarized as follows:

| | |
|---|---|
| Color (Gardner / DIN ISO 4630) | < 1 |
| OH Value (DIN 53240) | 200 - 212 mg KOH/g |
| Acid Value (ISO 660) | ≤ 0.2 mg KOH/g |
| Water Content (ISO 2464) | ≤ 0.2 % |
| Viscosity at 25°C (ISO 2555) | 1800 - 2800 mPa/s |
| Functionality | 2 |

In a preferred embodiment in combination with any of the above or below embodiments, the dimer of a fatty alcohol is present in the polycondensate a) in a concentration of 10 mol% to 70 mol%, preferably in a concentration of 10 mol% to 60 mol%, especially preferably in a concentration of 20 mol% to 50 mol%.

The term "diacid monomer" as used herein (being different from component a1)) refers to a saturated, unsaturated or aromatic dicarboxylic acid which is linear, branched or cyclic. Preferred are saturated or aromatic diacid monomers, in particular saturated (i.e. not containing carbon-carbon double bonds) monomers. In a preferred embodiment in combination with any of the above or below embodiments, the diacid monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diacid monomer is derived from renewable sources, in particular selected from the group consisting of succinic acid, sebacic acid, azelaic acid and 2,5-furandicarboxylic acid. For instance, succinic acid is produced by fermentation of sugars, and sebacic acid and azelaic acid are both industrially obtained from castor oil. In another preferred embodiment in combination with any of the above or below embodiments, dimers of fatty acids according to the definition below may be used as diacid monomers.

In a preferred embodiment in combination with any of the above or below embodiments, the diacid monomer is present in the polycondensate a) in a concentration of 10 mol% to 80 mol%, preferably in a concentration of 20 mol% to 70 mol%, more preferably in a concentration of 35 mol% to 55 mol%.

The term "diester monomer" as used herein refers to the alkylester of the "diacid monomer", wherein the alkyl group has from 1 to 24 carbon atoms and is preferably independently selected from a methyl, ethyl, propyl and/or isopropyl group.

In a preferred embodiment, in combination with any of the above or below embodiments, component a1) is present in the polycondensate a) in a concentration of 5 mol% to 70 mol%, preferably in a concentration of 5 to 50 mol%, especially preferably in a concentration of 5 mol% to 30 mol%.

In a preferred embodiment, in combination with any of the above or below embodiments, component a2) is present in the polycondensate a) in a concentration of 10 mol% to 70 mol%, preferably in a concentration of 10 mol% to 60 mol%.

In a preferred embodiment, in combination with any of the above or below embodiments, component a3) is present in the polycondensate a) in a concentration of 10 mol% to 80 mol%, preferably in a concentration of 35 mol% to 60 mol%.

In another preferred embodiment, in combination with any of the above or below embodiments, the polycondensate a) has a glass transition temperature (Tg) ranging from -50°C to 0°C, preferably from -10°C to -40°C. As used herein, the Tg is determined using Differential Scanning Calorimetry. For the DSC analysis, the samples were first cooled to -100°C and then heated up to 50°C (heating ramp + 10°C/min) in a nitrogen atmosphere.

In another preferred embodiment, in combination with any of the above or below embodiments, the adhesive has a Tg of from -50°C to 0°C, preferably from -10°C to -40°C.

In a preferred embodiment, in combination with any of the above or below embodiments, the polycondensate a) is present in a concentration of 20 wt% to 95 wt%, preferably in a concentration of 40 wt% to 90 wt%, based on the composition or adhesive.

In a preferred embodiment, in combination with any of the above or below embodiments, component a) is a polycondensate of component a1), component a2) and component a3), wherein the molar ratio of a1) to a2) is >1, preferably from 1.1 to 3:1, more preferably from 1.15 to 2:1, and in particular from 1.05 to 1.5:1.

In a preferred embodiment, in combination with any of the above or below embodiments, the polycondensate a) has a weight average molecular weight of from 2,000 to 50,000 g/mol, more preferably from 5,000 to 30,000 g/mol. As used herein, the average molecular weights of the polymers were determined by gel permeation chromatography (GPC) instrument (Waters Model Pump 515 and Waters 2414 refractive index detector) with styragel columns relative to polystyrene (PS) standards using tetrahydrofuran (THF) as eluent.

In a preferred embodiment in combination with any of the above or below embodiments, the non-reactive compound b) is a tackifying resin b1), preferentially selected from the group consisting of rosins and their derivates (abietic acid, abietic acid esters), terpenes and their derivatives (polyterpene resins, terpene-phenol resins), aliphatic, cycloaliphatic and aromatic resins (C5 aliphatic resins, C9 aromatic resins, and C5/C9 aliphatic/aromatic resins), hydrogenated hydrocarbon resins, and their mixtures. In a preferred embodiment, in combination with any of the above or below embodiments, component b1) is present in the compound b) in a concentration of 60 mol% to 100 mol%, preferably in a concentration of 70 mol% to 90 mol%.

In a preferred embodiment in combination with any of the above or below embodiments, the non-reactive compound b) is a polyester polyol b2). In a preferred embodiment, in combination with any of the above or below embodiments, component b2) is present in the compound b) in a concentration of 60 mol% to 100 mol%, preferably in a concentration of 70 mol% to 90 mol%.

In a preferred embodiment in combination with any of the above or below embodiments, the non-reactive compound b) is a plasticizer b3), more preferably a plasticizer derived from a renewable resource. In a preferred embodiment, in combination with any of the above or below embodiments, component b3) is present in the compound b) in a concentration of 60 mol% to 100 mol%, preferably in a concentration of 70 mol% to 90 mol%.

In a preferred embodiment, in combination with any of the above or below embodiments, the component b) is present in a concentration of 5 wt% to 80 wt%, preferably in a concentration of 10 wt% to 60 wt%, based on the total weight of the composition or adhesive.

In a preferred embodiment in combination with any of the above or below embodiments, a2) further contains a diol monomer (i.e. in combination with the dimer of the fatty alcohol). The term "diol monomer" as used herein refers to a saturated, unsaturated or aromatic diol which is linear, branched or cyclic. In a preferred embodiment in combination with any of the above or below embodiments, the diol monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diol monomer is derived from renewable sources, in particular, selected from the group consisting of 1,3-propanediol, 1,4-butanediol, isosorbide or bishydroxymethyl furfural.

In a preferred embodiment in combination with any of the above or below embodiments, the diol monomer is present in the polycondensate a) in a concentration of 50 mol% to 90 mol%, preferably in a concentration of 55 mol% to 80 mol%, more preferably in a concentration of 60 mol% to 70 mol%, when employed in combination with the dimer of the fatty alcohol.

In a preferred embodiment in combination with any of the above or below embodiments, a2) further contains a polyol. The term "polyol" as used herein refers to a saturated, unsaturated or aromatic polyol which is linear, branched or cyclic and contains at least 3 alcohol functions. In a preferred embodiment in combination with any of the above or below embodiments, the diol monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diol monomer is derived from renewable sources, in particular, selected from the group consisting of glycerol, sorbitol or castor oil.

In a preferred embodiment in combination with any of the above or below embodiments, the polyol is present in the polycondensate a) in a concentration of 50 mol% to 90 mol%, preferably in a concentration of 55 mol% to 80 mol%, more preferably in a concentration of 60 mol% to 70 mol%.

The term "dimer of a fatty acid", as used herein, refers to the dimerisation product of mono- or polyunsaturated fatty acids and/or esters thereof. In a preferred embodiment, in combination with any of the above or below embodiments, the fatty acid has from 14 to 22 carbon atoms, i.e. 14, 15, 16, 17, 18, 19, 20, 21 or 22 carbon atoms.

In another preferred embodiment, in combination with any of the above or below embodiments, the fatty acid is selected from the group consisting of oleic acid, linoleic acid, palmitoleic acid, eleostearic acid, ricinoleic acid, vernolic acid, licanic acid, myristoleic acid, margaroleic acid, gadoleic acid, eicosadienoic acid and/or erucic acid. In a further preferred embodiment, the fatty acid is selected from the group consisting of a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid.

Dimers of a fatty acid are commercially available. For example, dimers of oleic acid or linoleic acid are available from CRODA (Gouda, The Netherlands) under the trade name PRIPOL 1009, or OLEON (Venette, France) under the trade names RADIACID 0976. PRIPOL 1009 and RADIACID 0976 are high-purity, fully hydrogenated, and distilled aliphatic dimer acids. These products appear as colorless to light colored, clear viscous liquids. Their properties can be summarized as follows:

| | |
|---|---|
| Color (Gardner / DIN ISO 4630) | < 1 |
| Acid Value (ISO 660) | 195 mg KOH/g |
| Monobasic acids (HPLC %) | max 2 % |
| Dibasic Acids (HPLC %) | min 95 % |
| Polybasic Acids (HPLC %) | 1 to 5 % |
| Viscosity at 25°C, poise (ASTM 2196) | 40-70 |

In a preferred embodiment in combination with any of the above or below embodiments, the dimer of a fatty acid is present in the polycondensate a) in a concentration of 20 mol% to 70 mol%, preferably in a concentration of 30 mol% to 60 mol%, more preferably in a concentration of 40 mol% to 50 mol%.

The term "dialkylester of a dimer fatty acid" as used herein refers to the alkylester of the "dimer of a fatty acid", In one embodiment, the fatty acid used to form the dimer of a fatty acid or its dialkylester is a linoleic, linolenic stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid, and/or mixtures thereof. The dialkylester may likewise be a triglyceride. The alkyl group in the dialkylester has from 1 to 24 carbon atoms, with the preferred alkyl groups being methyl, ethyl, propyl or isopropyl.

According to the present invention, the component a2) essentially comprises a dimer of a fatty alcohol or a diol, or a mixture thereof. If a dimer of a fatty alcohol is used as component a2), component a3) is a diacid monomer and/or a diester monomer being different from component a1). The diol which may be used in component a2) in alternative to a dimer of a fatty alcohol is a saturated, unsaturated or aromatic diol which is linear, branched or cyclic. In a preferred embodiment in combination with any of the above or below embodiments, the diol has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diol may be derived from renewable sources, in particular, selected from the group consisting of 1,3-propanediol, 1,4-butanediol, isosorbide or bishydroxymethyl furfural.

If used in alternative to a dimer of a fatty alcohol, the diol is preferably present in the polycondensate a) in a concentration of 10 mol% to 80 mol%, more preferably in a concentration of 20 mol% to 70 mol%, especially preferably in a concentration of 30 mol% to 60 mol%.

If such a diol is used in component a2) in alternative to a dimer of a fatty alcohol, the diacid monomer in component a3) is a dimer of a fatty acid. In that case, the dimer of a fatty acid is preferably present in the polycondensate a) in a concentration of 10 mol% to 80 mol%, more preferably in a concentration of 20 mol% to 70 mol%, especially preferably in a concentration of 35 mol% to 55 mol%.

In a preferred embodiment in combination with any of the above or below embodiments, a reactive diluent c) is added to the polycondensate a) after the polycondensation has been completed. Such a reactive diluent could be used to adjust the viscosity of the adhesive composition ("i.e. the reactive syrup") to facilitate the coating step.

The term "reactive diluent" as used herein refers to low molecular weight compounds having an ethylenically unsaturated compound that could be co-polymerized with the itaconate units of the polycondensate a) during the curing step of the adhesive. The term "low molecular weight", as used herein, denotes a molecular weight of less than 2,000 g/mol, preferably less than 500 g/mol, more preferably less than 300 g/mol. The most preferred reactive diluents belong to the class of mono-functional acrylic esters or methacrylic esters, where the alkyl segment is a saturated, unsaturated or aromatic hydrocarbon chain which is linear, branched or cyclic. In a preferred embodiment in combination with any of the above or below embodiments, the alkyl chain of the (meth)acrylic acid ester has from 3 to 18 carbon atoms, i.e. 3, 4, 5, 6, 7, 8, 9, 10, 11, 12, 13, 14, 15, 16, 17 or 18 carbon atoms, more preferably from 2 to 8 carbon atoms, i.e. 2, 3, 4, 5, 6, 7 or 8 carbon atoms. In another preferred embodiment in combination with any of the above or below embodiments, the reactive diluent is at least partially derived from renewable sources, in particular, selected from the group consisting of n-butyl acrylate, 2-ethylhexyl acrylate, or n-octyl acrylate.

In a preferred embodiment, in combination with any of the above or below embodiments, the reactive diluent c) is present in a concentration of 5 wt% to 80 wt%, preferably in a concentration of 30 wt% to 70 wt%, based on the polycondensate a).

Preferably, most of the building blocks of the adhesive are derived from renewable resources (including itaconic acid, which is typically obtained by fermentation of sugars) thus rendering the adhesive bio-based. In a preferred embodiment in combination with any of the above or below embodiments, the composition or adhesive is bio-based. The term "bio-based" as used herein requires at least 70% of renewable carbon, and preferably at least 90% of renewable carbon, according to ASTM 6866-08.

The adhesive (or adhesion) strength can be measured by a 180°C peel test. This type of testing determines the force that is necessary to tear a strip of tape from a standard surface at a constant speed. The result is the force referred to the width of the tape. Samples for the peel test were prepared as follows. At first, the biobased adhesive composition is coated on a carrier film (for instance PET) and cured. Then, 2 cm wide, 10 cm long pieces of adhesive tapes are cut and placed on a table (the adhesive face on top). Half of the tape length is then covered with a second strip of plastic film (this film should be identical to the carrier film on which the adhesive composition has been previously coated). Then, this assembly is turned upside down and the free adhesive domain is applied manually on the reference surface (for instance AB steel). A 2 kg cylinder is rolled twice on the tape in order to ensure good contact between the adhesive and the reference surface. A dwell time of 15 minutes is observed prior to performing the peeling test. The peel test is performed with a Zwick Z005 testing machine at a constant peeling speed of 300 mm/min.

The adhesive characteristics of the inventive composition or adhesive can be fine-tuned by multiple manners, such as:
- Varying the concentration of cross-linkable itaconate ester units in the polycondensate a), and/or
- Varying the dissipative character of the glue by tuning the ratio, structure and functionality of non-reactive component b) within the adhesive composition, and/or
- Varying the degree of curing of the adhesive (for instance by tuning the dose of radiation in the case of UV curing or tuning the curing temperature and/or time in the case of a thermal curing event), and/or
- Varying the polarity and functionality of the additional diol, diacid or diester monomers, and/or
- Varying the amount, structure and/or functionality of the reactive diluent added to the polycondensate a) prior curing the adhesive, and/or
- Varying the thickness of the glue layer

Thus, the composition or adhesive is suitable for a wide range of potential applications. For instance, the adhesion force on steel can be in the range of from 20 to 2000 cN/20mm. The adhesion force can be adjusted to be moderate, preferably below 100 cN/20mm for temporal surface protection, or the adhesion force can be adjusted to be high, preferably from 500 to 2,000 cN/20mm, for permanent bonding and joining applications.

In another preferred embodiment, in combination with any of the above or below embodiments, the polycondensate has a number of free carboxylic acid groups in the range of 5 to 25 mg KOH/g and a number of free hydroxyl groups in the range of 5 to 25 mg KOH/g. The acid value is defined as the number of mg of potassium hydroxide required to neutralize the free fatty acids in 1 g of sample, and was measured by direct titration with a standard potassium hydroxide solution. The hydroxyl value is defined as the number of mg of potassium hydroxide equivalent to the hydroxyl content of 1 g of sample, and is measured by acetylation followed by hydrolyzation of excess acetic anhydride. The acetic acid formed is subsequently titrated with an ethanolic potassium hydroxide solution.

In another preferred embodiment, in combination with any of the above or below embodiments, the polycondensate is obtainable by esterification of the diacids a1) and a3) with the diols a2) at 150°C to 240°C, more preferably at 165°C to 200°C, in particular at about 180°C.

In another preferred embodiment, in combination with any of the above or below embodiments, the polycondensate is obtainable by trans-esterification of the dialkyl esters a1) and a3) with the diols a2) at 80°C to 160°C, more preferably at 100°C to 140°C, in particular at about 120°C.

In another preferred embodiment, in combination with any of the above or below embodiments, the monomers a1), a2) and a3) are added simultaneously in the polycondensation reactor. In another preferred embodiment, in combination with any of the above or below embodiments, one the monomers a1), a2) or a3) is only added at a later stage of the polymerization (that is, when the two other components have already been partly or totally esterified).

In a preferred embodiment, in combination with any of the above or below embodiments, the reaction is performed without a solvent, in particular, if the viscosity of the polyester remains low, i.e. if the molecular weight of the polycondensate remains low (typically lower than 50,000 g/mol weight average molecular weight). The advantage of performing the reaction without solvent, i.e. in bulk, is that the carbon footprint and the VOC emissions of the inventive composition or adhesive can be further lowered.

In a preferred embodiment in combination with any of the above or below embodiments, a vacuum is applied during the polycondensation reaction in order to promote the extraction of the by-products (water in case of diacids, and methanol in cased of dimethyl esters) and to speed up the reaction. The vacuum pressure is preferably in a range of 0.1 mbar to 25 mbar, more preferably 1 mbar to 5 mbar, in particular about 1.5 mbar.

In a preferred embodiment in combination with any of the above or below embodiments, the polycondensation reaction is conducted in the presence of a polymerization catalyst. Catalysts that may be used for the polycondensation process are well known in the art.

In another preferred embodiment in combination with any of the above or below embodiments, the esterification catalyst is selected from the group consisting of salts and oxides of Li, Ca, Mg, Mn, Zn, Pb, Sb, Sn, Ge, and Ti, and their glycol adducts, more preferably acetate salts of Li, Ca, Mg, Mn, Zn, Pb, Sb, Sn, Ge, and Ti, and Ti alkoxides, even more preferably titanium(IV) n-butoxide, tin(II) octoate, butyl tin chloride dihydroxide, manganese acetate, or zinc acetate, in particular titanium(IV) n-butoxide.

In a preferred embodiment in combination with any of the above or below embodiments, the catalyst is added at the beginning of the reaction. In another preferred embodiment in combination with any of the above or below embodiments, the catalyst is added one or more times to the reaction mixture during the reaction period.

In a preferred embodiment in combination with any of the above or below embodiments, the polymerization catalyst is used in a concentration of 0.001 to 2 wt%, more preferably 0.005 to 0.5 wt%, in particular about 0.02 wt%.

In a preferred embodiment in combination with any of the above or below embodiments, the polycondensation reaction is conducted in the presence of a radical inhibitor to prevent reaction of the itaconate unsaturations during the polyester formation. Inhibitors that may be used for this purpose are well known in the art. In another preferred embodiment in combination with any of the above or below embodiments, the inhibitor is selected from the group consisting of hydroquinone, 4-methoxyphenol (also known as monomethyl ether hydroquinone or MEHQ), 2-methylhydroquinone, benzoquinone or 2-methylbenzoquinone.

In a preferred embodiment in combination with any of the above or below embodiments, the inhibitor is added simultaneously with the itaconate compound a1). In a preferred embodiment in combination with any of the above or below embodiments, the radical inhibitor is used in a concentration of 5 to 500 ppm, more preferably 50 to 250 ppm, in particular about 100 ppm.

In another preferred embodiment, in combination with any of the above or below embodiments, the method for preparing the adhesive comprises mixing the polycondensate a) and the non-reactive compound b) either by:
- Mixing the two components in bulk (without solvent). In that case heating at a temperature between 40°C to 100°C can be necessary in order to decrease the melt viscosity and ensure good homogenization of the mixture, or
- Mixing at room temperature is also possible but could require the addition of an organic solvent and/or of the reactive diluent in order to create a reactive "syrup" with a suitable viscosity enabling the coating step.

The present invention further relates to a process for radically curing the adhesive composition, wherein the curing is effected by adding an initiator to the adhesive composition. Preferably, the curing is effected at a temperature in the range from -20°C to +200°C and the initiator can be a photo-initiator, a thermal initiator and/or a redox initiator.

In another preferred embodiment, in combination with any of the above or below embodiments, the adhesive is cured by a UV-initiated process.

In the UV-curing method, the composition should not contain any organic solvents. If coating has to be done at RT, a reactive diluent could be advantageously added to the composition for lowering the viscosity of the resulting syrup in order to make handling (coating) thereof more easy. Alternatively, a hot-melt processing can also be applied for coating the composition. In that later case, addition of a reactive diluent is not necessary, and the viscosity of the composition is conveniently adjusted by performing the lamination at a temperature ranging from 40°C to 120°C.

In another preferred embodiment, in combination with any of the above or below embodiments, a photo-initiating system can be a photo-initiator as such, or a mixture of photoinitiators, and can be chosen from the large numbers of photo-initiating systems known by the person skilled in the art. Suitable photoinitiators that create free radicals upon irradiation with light of respective wavelength are a preferred group of catalysts. Examples of suitable photoinitiators include the compounds manufactured by Ciba, Switzerland under the trade names Darocur® and Irgacure®. Such initiator compounds are usually added to the composition in small amounts, for example, 0.1 wt% to 3 wt%, preferably from 0.5 wt% to 2 wt%, relative to the total weight of the composition.

In another preferred embodiment, in combination with any of the above or below embodiments, the adhesive is cured by a thermally-initiated process. The thermal initiator can be selected from azo compounds like for example azo isobutyronitril (AIBN), C-C labile compounds like for example benzopinacole, peroxides, and mixture thereof. In the thermal-curing method, the composition could contain both an organic solvent and a reactive diluent.

In another preferred embodiment, in combination with any of the above or below embodiments, the adhesive is cured by a redox-initiated process. The redox initiator can be selected from hydroperoxides, peroxycarbonates, peroxyesters, diacylperoxides, or dialkylperoxides. In the redox-curing method, the composition could contain both an organic solvent and a reactive diluent.

In another preferred embodiment, in combination with any of the above or below embodiments, said coating solution is laminated on a sheet or a film.

In another embodiment, the invention is directed to the use of the adhesive for laminating a sheet or a film. The sheet or film is preferably fossil-based or bio-based. It is possible to obtain a fully bio-based tape structure by laminating a bio-based adhesive composition onto a bio-based carrier film. The fossil-based plastic sheet or film is preferably made from poly(ethylene terephthalate) (PET), polyethylene (PE), polyvinyl chloride (PVC) and/or polypropylene (PP). The bioplastic sheet or film is preferably made from cellulose, starch and/or polylactic acid (PLA). In another preferred embodiment, in combination with any of the above or below embodiments, the sheet or film is made from poly(ethylene terephthalate), polyethylene, polypropylene, cellulose, starch and/or polylactic acid. Cellulose-based films are commercially available, for example, from Innovia Films under the trade name NatureFlex. Polylactic acid-based films are commercially available, for example, from Nordenia Technologies. Preferably, a modified-PLA film with enhanced temperature resistance is used.

The adhesive of the present invention shows a high level of transparency, tunable adhesion level, low VOC emissions and a low carbon footprint.

In a preferred embodiment in combination with any of the above or below embodiments, the composition or adhesive comprises a filler, more preferably selected from the group consisting of a silicate, talcum, calcium carbonate, clay, carbon black, pigments and pigment pastes, or pulp chopped fibers (preferably selected from the group consisting of kenaf, hemp, flax, jute, sisal, cotton and linen).

### EXAMPLES

The following examples further describe the invention.

### Example 1: Bulk (solvent-free) synthesis of an unsaturated polycondensate from a dimer of a fatty diol, dimethyl itaconate, and dimethyl sebacate

A typical polymerization was carried out according to the following procedure: dimethyl itaconate (21.6 g, 136.52 mmol), dimethyl sebacate (125.9 g, 546.48 mmol), PRIPOL 2033 (352.6 g, 654.48 mmol), 4-methoxyphenol (100 ppm relative to total monomers weight) and the trans-esterification catalyst titanium tetrabutoxide (0.02 wt% relative to OH groups) were weighed into a 1 liter reactor. The weight concentration of dimethyl itaconate, dimethyl sebacate and dimer diol in the monomer mixture were 4.32 wt%, 25.17 wt% and 70.51 wt%, respectively. The molar concentration of dimethyl itaconate, dimethyl sebacate and dimer diol in the monomer mixture were 10.2 mol%, 40.9 mol% and 48.9 mol%, respectively.

The reactor was fitted with an Allihn reflux condenser and a Dean-Stark condenser to collect the by-product (methanol) created by the polycondensation reaction. During the first part of the experiment, the set-up was continuously flushed with inert gas (nitrogen) to limit oxidation and facilitate transport of methanol. While stirring, the mixture was heated from room temperature to 120°C using a heating mantle and a U-shaped mechanical stirrer. After stirring overnight at 120°C, vacuum processing was applied (with typical pressure below 10 mbar), while the reaction temperature was increased to 150°C. After 4 hours under these conditions, the polymer was left to cool and discharged from the reactor.

The resulting amorphous polyester (referred to as Polymer 1 in the following) had a glass transition temperature (Tg) of -48.2°C, a weight average molecular weight (Mw) of 37315 g/mol and a polydispersity index of 2.16.

### Example 2: Tuning the concentration of double bonds within the unsaturated polycondensate

The protocol described in example 1 can be adapted to produce a wide range of unsaturated polyester with varying degree of unsaturations as shown below.

Dimethyl itaconate (52.7 g, 333.19 mmol), dimethyl sebacate (76.8 g, 333.37 mmol), RADIANOL 1990 (370.5 g, 687.70 mmol), titanium tetrabutoxide (0.02 wt% relative to OH groups) and 4-methoxyphenol (100 ppm relative to total monomers weight) were weighed in the reaction vessel. The weight concentration of dimethyl itaconate, dimethyl sebacate and dimer diol in the monomer mixture were 10.54 wt%, 15.35 wt% and 74.11 wt%, respectively. The molar concentration of dimethyl itaconate, dimethyl sebacate and dimer diol in the monomer mixture were 24.6 mol%, 24.6 mol% and 50.8 mol%%, respectively.

Polymer synthesis was carried out as reported in Example 1. The resulting amorphous polyester (referred to as Polymer 2 in the following) had a glass transition temperature (Tg) of -48.3°C, a weight average molecular weight (Mw) of 24452 g/mol and a polydispersity index of 2.33.

### Example 3: Bulk (solvent-free) synthesis of an unsaturated polycondensate from a dimer of a fatty diol, itaconic acid, and sebacic acid

A typical polymerization was carried out according to the following procedure: itaconic acid (18.6 g, 143.31 mmol), sebacic acid (116.0 g, 573.67 mmol), PRIPOL 2033 (3352.6 g, 654.48 mmol), 4-methoxyphenol (100 ppm relative to total monomers weight) and the trans-esterification catalyst titanium tetrabutoxide (0.02 wt% relative to OH groups) were weighed into a 1 liter reactor. The weight concentration of itaconic acid, sebacic acid and dimer diol in the monomer mixture were 3.73 wt%, 23.20 wt% and 73.07 wt%, respectively. The molar concentration of itaconic acid, sebacic acid and dimer diol in the monomer mixture 10.3 mol%, 41.1 mol% and 48.6 mol%, respectively.

The reactor was fitted with an Allihn reflux condenser and a Dean-Stark condenser to collect the by-product (methanol) created by the polycondensation reaction. During the first part of the experiment, the set-up was continuously flushed with inert gas (nitrogen) to limit oxidation and facilitate transport of methanol. While stirring, the mixture was heated from room temperature to 150°C using a heating mantle and a U-shaped mechanical stirrer. After stirring overnight at 150°C, vacuum processing was applied (with typical pressure below 10 mbar), while the reaction temperature was maintained at 150°C. After 6 hours under these conditions, the polymer was left to cool and discharged from the reactor.

The resulting amorphous polyester (referred to as Polymer 3 in the following) had a glass transition temperature (Tg) of -47.9°C, a weight average molecular weight (Mw) of 21156 g/mol and a polydispersity index of 2.42.

### Example 4: Bulk (solvent-free) synthesis of an unsaturated polycondensate from a dimer of a fatty acid, itaconic acid and 1,4-butanediol

A typical polymerization was carried out according to the following procedure: Pripol 1006 (788.2 g, 1390.4 mmol), itaconic acid (46.0 g, 353.57 mmol), 1,4-butanediol (165.80 g, 1839.77 mmol), 4-methoxyphenol (100 mg) were weighed into a 1 liter reactor. The weight concentration of dimer acid, itaconic acid and butanediol in the monomer mixture were 78.82 wt%, 4.60 wt% and 16.58 wt%, respectively. The molar concentration of dimer acid, itaconic acid and butanediol in the monomer mixture were 38.8 mol%, 9.9 mol% and 51.3 mol%, respectively.

The reactor was fitted with an Allihn reflux condenser and a Dean-Stark condenser to collect the by-product (water) created by the polycondensation reaction. During the first part of the experiment, the set-up was continuously flushed with inert gas (nitrogen) to limit oxidation and facilitate transport of methanol. While stirring, the mixture was heated from room temperature to 180°C using a heating mantle and a U-shaped mechanical stirrer. After stirring overnight at 180°C, vacuum processing was applied (with typical pressure below 10 mbar) and 320 mg of titanium tetrabutoxide (esterification catalyst) were added. The reaction temperature was increased to 190 for 2 hours, 200°C for 3 hours and 210°C for 1 hour. The polymer was left to cool and discharged from the reactor at 100°C.

The resulting amorphous polyester (referred to as Polymer 4 in the following) had a glass transition temperature (Tg) of -46°C, a weight average molecular weight (Mw) of 60215 g/mol and a polydispersity index of 2.16.

The reactive unsaturated polycondensate compositions in accordance with Examples 1 to 4 are summarized in Table 1.

**TABLE 1**

| | **Example 1** | | **Example 2** | | **Example 3** | | **Example 4** | |
|---|---|---|---|---|---|---|---|---|
| component | compound | content | compound | content | compound | content | **compound** | **content** |
| a1) | dimethyl itaconate | 4.32 wt. %* | dimethyl itaconate | 10.54 wt. %* | itaconic acid | 3.73 wt. %* | **itaconic acid** | **4.60 wt. %*** |
| a2) | PRIPOL 2033 | 70.51 wt. %* | RADIANOL 1990 | 74.11 wt. %* | PRIPOL 2033 | 73.07 wt. %* | **1,4-butanediol** | **16.58 wt. %*** |
| a3) | dimethyl sebacate | 25.17 wt. %* | dimethyl sebacate | 15.35 wt. %* | sebacic acid | 23.20 wt. %* | **PRIPOL 1006** | **78.82 wt. %*** |
| inhibitor | 4-methoxyphenol | 100 ppm* | 4-methoxyphenol | 100 ppm* | 4-methoxyphenol | 100 ppm* | **4-methoxyphenol** | **100 ppm*** |
| esterification catalyst | titanium tetrabutoxide | 0.02 wt%** | titanium tetrabutoxide | 0.02 wt%** | titanium tetrabutoxide | 0.02 wt%** | **titanium tetrabutoxide** | **0.02 wt%**** |
| M_{w} of the unsaturated polycondensate (g/mol) | 37315 | | 24452 | | 21156 | | **60215** | |
| Tg (°C) | -48.2 | | -48.3 | | -47.9 | | **-46.0** | |
| Polydispersity index | 2.16 | | 2.33 | | 2.42 | | **2.16** | |

| | | | | | | | | |
|---|---|---|---|---|---|---|---|---|
| *based on the total weight of the monomer mixture, **** relative to OH groups** | | | | | | | | |

### Example 5: Adhesive compositions prepared by a solvent-based coating process followed by a thermal-curing treatment

The tackifier DERTOPOLINE P125 (pentaerythritol ester of polymerized rosin) was obtained from the company DRT (Dax, France) and dissolved in toluene (100 g Dertopoline for 50 g of toluene).

24.75 g of unsaturated Polymer 1 (as synthesized in Example 1) were mixed with 7.425 g of the DERTOPOLINE P125/toluene stock solution, and 0.3 g of azobisisobutyronitrile (AIBN). On a dry basis (excluding the solvent toluene), the weight percentages of unsaturated polyester (Polymer 1), tackifier (DERTOPOLINE P125) and thermal-initiator were 82.50%, 16.50% and 1%, respectively. Additional 10.4 g of toluene was added to the mixture in order to obtain an overall solid base of 70 wt% (solid base is expressed in wt% of adhesive precursors relative to the total solution). Once this solution had been homogenized, a 35 µm adhesive layer (wet thickness) was roll-coated manually at room temperature on a 50 µm thick polyethylene terephtalate (PET) film, and this bilayer stack was dried and cured in an oven at 65°C for 90 minutes.

This resulted in a tacky film with clean removability suitable for pressure sensitive adhesive (PSA) applications. The dry thickness of the adhesive layer was 25 µm. The adhesive strength, as measured by a 180° peel test to panels after double rolling of a two kg cylinder on the tape and a subsequent dwell time of 15 minutes, was 207 cN/20mm from BA steel and 107 cN/20mm from glass.

### Example 6: Adhesive compositions prepared by a solvent-based coating process followed by a UV-curing treatment

21.21 g of unsaturated Polymer 1 (as synthesized in Example 1) were mixed with 12.73 g of the DERTOPOLINE P125/toluene stock solution (as prepared in Example 5), and 0.3 g of Darocur 1173. On a dry basis (excluding the solvent toluene), the weight percentages of unsaturated polyester, rosin ester and photo-initiator were 70.71%, 28.29% and 1%, respectively. Additional toluene was added to the mixture in order to obtain an overall solid base of 70 wt%. This solution had been homogenized, a 35 µm adhesive layer (wet thickness) was roll-coated at room temperature on a transparent 50 µm thick PET film. After coating, the solvent was evaporated by placing the uncured tape in an oven at 30°C for 60 minutes (dry thickness of the adhesive layer was 25 µm). Once the solvent is evaporated, the tape was covered by a siliconized (anti-adhesive) transparent PET release liner, and the tape assembly was placed under a UV-light source made of 3 UV tubes (Philips TL-D18/08 black-light tube 60cm/20W) for 1 hour.

This resulted in a tacky film with clean removability suitable for pressure sensitive adhesive (PSA) applications. The adhesive strength, as measured by a 180° peel test to panels after double rolling of a two kg cylinder on the tape and a subsequent dwell time of 15 minutes, was 269 cN/20mm from BA steel and 338 cN/20mm from glass.

### Example 7: Adhesive compositions prepared by a solvent-based coating process followed by a UV-curing treatment

16.97 g of unsaturated Polymer 2 (as synthesized in Example 2) were mixed with 19.10 g of the DERTOPOLINE P125/toluene stock solution (as prepared in Example 5), and 0.3 g of Darocur 1173. On a dry basis (excluding the solvent toluene), the weight percentages of unsaturated polyester, rosin ester and photo-initiator were 56.57%, 42.43% and 1%, respectively. Additional toluene was added to the mixture in order to obtain an overall solid base of 70 wt%. This solution had been homogenized, a 35 µm adhesive layer (wet thickness) was roll-coated at room temperature on a transparent 50 µm thick PET film. After coating, the solvent was evaporated by placing the uncured tape in an oven at 30°C for 60 minutes (dry thickness of the adhesive layer was 25 µm). Once the solvent is evaporated, the tape was covered by a siliconized transparent PET release liner, and the tape assembly was placed under a UV-light source made of 3 UV tubes (Philips TL-D18/08 black-light tube 60cm/20W) for 1 hour.

This resulted in a moderately tacky film with clean removability suitable for PSA applications. The adhesive strength, as measured by a 180° peel test to panels after double rolling of a two kg cylinder on the tape and a subsequent dwell time of 15 minutes, was 23.4 cN/20mm from BA steel.

### Example 8: Adhesive compositions prepared by a solvent-based coating process followed by a UV-curing treatment

21.21 g of unsaturated Polymer 3 (as synthesized in Example 3) were mixed with 12.73 g of the DERTOPOLINE P125/toluene stock solution (as prepared in Example 5), and 0.3 g of Darocur 1173. On a dry basis (excluding the solvent toluene), the weight percentages of unsaturated polyester, rosin ester and photo-initiator were 70.71%, 28.29% and 1%, respectively. Additional toluene was added to the mixture in order to obtain an overall solid base of 70 wt%. This solution had been homogenized, a 35 µm adhesive layer (wet thickness) was roll-coated at room temperature on a transparent 50 µm thick PET film. After coating, the solvent was evaporated by placing the uncured tape in an oven at 30°C for 60 minutes (dry thickness of the adhesive layer was 25 µm). Once the solvent is evaporated, the tape was covered by a siliconized (anti-adhesive) transparent PET release liner, and the tape assembly was placed under a UV-light source made of 3 UV tubes (Philips TL-D18/08 black-light tube 60cm/20W) for 1 hour.

This resulted in a tacky film with clean removability suitable for pressure sensitive adhesive (PSA) applications. The adhesive strength, as measured by a 180° peel test to panels after double rolling of a two kg cylinder on the tape and a subsequent dwell time of 15 minutes, was 753 cN/20mm from BA steel and 850 cN/20mm from glass.

### Example 9: Adhesive composition prepared by a solvent-free (hot-melt) coating process followed by a UV-curing treatment

Unsaturated Polymer 1 (as synthesized in Example 1) were mixed with 50 wt% of pure DERTOPOLINE P125 pellets and homogenized at 150°C. The melt was cooled down to 80°C and the calculated amount of Darocur 1173 was added. The weight percentages of unsaturated polyester, rosin ester and photo-initiator were 66%, 33% and 1%, respectively. A 25 µm thick layer of the hot-melt glue was roll-coated at 80°C on a transparent 50 µm thick PET film. After coating, the un-cured tape was covered with a siliconized (anti-adhesive) transparent PET release liner, and the tape assembly was placed under 3 UV tubes (Philips TL-D18/08 black-light tube 60cm/20W) for 1 hour.

This resulted in a very tacky film with clean removability suitable for pressure sensitive adhesive (PSA) applications. The adhesive strength, as measured by a 180° peel test to panels after double rolling of a two kg cylinder on the tape and a subsequent dwell time of 15 minutes, was 962 cN/20mm from BA steel and 928 cN/20mm from glass.

### Example 10: Adhesive composition prepared by a solvent-free (hot-melt) coating process followed by a UV-curing treatment

Unsaturated Polymer 4 (as synthesized in Example 4) were mixed with 50 wt% of pure DERTOPOLINE P125 pellets and homogenized at 150°C. The melt was cooled down to 80°C and the calculated amount of photo-initiator (Darocur 1173) was added. The weight percentages of unsaturated polyester, rosin ester and photo-initiator were 66%, 33% and 1%, respectively. A 25 µm thick layer of the hot-melt glue was roll-coated at 80°C on a transparent 50 µm thick PET film. After coating, the un-cured tape was covered with a siliconized (anti-adhesive) transparent PET release liner, and the tape assembly was placed under UV-light for 1 hour.

This resulted in a very tacky film with clean removability suitable for pressure sensitive adhesive (PSA) applications. The adhesive strength, as measured by a 180° peel test to panels after double rolling of a two kg cylinder on the tape and a subsequent dwell time of 15 minutes, was 957 cN/20mm from BA steel and 932 cN/20mm from glass.

### Comparative Example 11: UV-cured unsaturated polyester without any additional saturated compound

29.70 g of unsaturated Polymer 1 (as synthesized in Example 1) were mixed with 0.3 g of Darocur 1173. The weight percentages of unsaturated polyester and photo-initiator were 99% and 1%, respectively. A 25 µm thick layer of the hot-melt mixture was roll-coated at 80°C on a transparent 50 µm thick polyethylene terephtalate (PET) film. After coating, the un-cured tape was covered with a siliconized (anti-adhesive) transparent PET release liner, and the tape assembly was placed under 3 Philips TL-D18/08 black-light tubes for 1 hour.

This resulted in a non-tacky film with limited adhesion on various substrates. The adhesive strength, as measured by a 180° peel test to panels after double rolling of a two kg cylinder on the tape and a subsequent dwell time of 15 minutes, was 1.9 cN/20mm from BA steel and 0.5 cN/20mm from glass.

### Example 12: Adhesive composition containing a reactive diluent

At first, the rosin ester DERTOPOLINE P125 was dissolved with an equal weight of the mono-functional monomer n-butyl acrylate (n-BA).

14.85 g of unsaturated Polymer 1 (as synthesized in Example 1) were mixed with 14.85 g of the DERTOPOLINE/n-BA stock solution, and 0.3 g of Darocur 1173. The weight percentages of unsaturated polyester (Polymer 1), rosin ester, reactive diluent and photo-initiator were 49.50%, 24.75%, 24.75% and 1%, respectively. Once this solution had been homogenized, a 25 µm adhesive layer was manually roll-coated at room temperature on a 50 µm thick polyethylene terephtalate (PET) film. This bilayer stack was immediately covered with a siliconized transparent PET liner, and the assembly was placed under 3 Philips TL-D18/08 black-light tubes for 1 hour.

This resulted in a tacky film with clean removability suitable for pressure sensitive adhesive (PSA) applications. The adhesive strength, as measured by a 180° peel test to panels after double rolling of a two kg cylinder on the tape and a subsequent dwell time of 15 minutes, was 25.5 cN/20mm from BA steel and 43.5 cN/20mm from glass.

The compositions in accordance with Examples 5-10 and 12 as well as Comparative Example 11 are summarized in Table 2.

As may be derived from Table 2, the adhesive compositions in accordance with the present invention exhibit excellent 180° peel strength properties that may be conveniently fine-tuned to the desired values by adjusting the ratios of components a), b) and c). Furthermore, no tacky residues were observed upon removal of the adhesive compositions from the testing panels.

**TABLE 2**

| | | **Example 5** | **Example 6** | **Example 7** | **Example 8** | **Example 9** | **Example 10** | **Comparative Example 11** | **Example 12** |
|---|---|---|---|---|---|---|---|---|---|
| reactive unsaturated polycondensate a) | | Polymer 1 | Polymer 1 | Polymer 2 | Polymer 3 | Polymer 1 | Polymer 4 | Polymer 1 | Polymer 1 |
| [wt.%]* | | 82.50 | 70.71 | 56.57 | 70.71 | 66.00 | XXXX | 99.0 | 49.50 |
| non-reactive component b) | | DERTOPOLINE | DERTOPOLINE | DERTOPOLINE | DERTOPOLINE | DERTOPOLINE | XXXX | - | DERTOPOLINE |
| | | P125 | P125 | P125 | P125 | P125 | | | P125 |
| [wt.%]* | | 16.50 | 28.29 | 42.43 | 28.29 | 33.00 | XXXX | - | 24.75 |
| component c) | | - | - | - | | - | XXXX | - | n-butyl acrylate |
| [wt.%]* | | - | - | - | | - | XXXX | - | 24.75 |
| initiator | | AIBN | DAROCUR | DAROCUR | DAROCUR | DAROCUR | XXXX | DAROCUR | DAROCUR |
| | | | 1173 | 1173 | 1173 | 1173 | | 1173 | 1173 |
| [wt.%]* | | 1.00 | 1.00 | 1.00 | 1.00 | 1.00 | XXXX | 1.00 | 1.00 |
| 180° peel strength [cN/20mm] | from BA steel | 207 | 269 | 23.4 | 753 | 962 | XXXX | 1.9 | 25.5 |
| | from glass | 107 | 338 | - | 850 | 928 | XXXX | 0.5 | 43.5 |

| | | | | | | | | | |
|---|---|---|---|---|---|---|---|---|---|
| *based on the total dry weight of the composition | | | | | | | | | |

## Claims

1. A composition for the preparation of a pressure-sensitive adhesive, the composition comprising
a) a reactive unsaturated polycondensate comprising repeating units derived from
a1) an organic molecule with at least one carbon-carbon double bond and at least two carboxylic acid groups or ester derivatives thereof, and
a2) a dimer of a fatty alcohol, and
a3) a diacid monomer, and/or a diester monomer being different from component a1); and
b) a non-reactive component chosen from
b1) a tackifying resin, and/or
b2) a low-Tg polyester polyol, and/or
b3) a plasticizer;
wherein the reactive unsaturated polycondensate is capable of being cured via a radical mechanism.

2. The composition of claim 1, wherein
a1) is selected among itaconic acid and/or citraconic acid and/or mesaconic acid and/or aconitic acid, and/or their respective dialkyl esters, and/or any mixtures thereof and/or
a2) further contains a polyol, and/or
a3) is selected among a dimer of a fatty acid and/or a dialkylester of a dimer of a fatty acid.

3. The composition of claim 2, wherein the fatty acid used to form the dimer of a fatty acid or its dialkylester is a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid, and/or mixtures thereof; wherein the alkyl group in the dialkylester has from 1 to 24 carbon atoms; or wherein the dialkylester is a triglyceride.

4. The composition of any of claims 1 to 3, wherein the dimer of a fatty alcohol is obtained by hydrogenation of a dimer of a fatty acid.

5. The composition of any of claims 1 to 4, wherein the concentration of component a) is from 20 to 95 wt% based on the composition.

6. The composition of any of claims 1 to 5, wherein the concentration of component b) is from 5 to 80 wt% based on the composition.

7. A composition for the preparation of a pressure-sensitive adhesive, the composition comprising
a) a reactive unsaturated polycondensate comprising repeating units derived from
a1) an organic molecule with at least one carbon-carbon double bond and at least two carboxylic acid groups or ester derivatives thereof, and
a2) a diol, and
a3) a dimer of a fatty acid; and
b) a non-reactive component chosen from
b1) a tackifying resin, and/or
b2) a low-Tg polyester polyol, and/or
b3) a plasticizer;
wherein the reactive unsaturated polycondensate is capable of being cured via a radical mechanism.

8. The composition of any of claims 1 to 7, further comprising c) a low molecular weight reactive diluent.

9. The composition of any of claims 1 to 8, wherein the polycondensate has a glass transition temperature (Tg) of from -50°C to 0°C.

10. A pressure-sensitive adhesive comprising the composition according to any one of claims 1 to 9.

11. The pressure-sensitive adhesive of claim 10, wherein the composition has been at least partly cured via a radical mechanism.

12. The pressure-sensitive adhesive of any of claims 10 or 11 having a glass transition temperature (Tg) of from -50°C to 0°C.

13. The pressure-sensitive adhesive of any of claims 10 to 12, wherein the pressure-sensitive adhesive has an adhesion force of from 20 cN/20mm to 2000 cN/20mm on steel at room temperature.

14. A method for preparing a pressure-sensitive adhesive, comprising:
mixing components a) and b) as defined in any one of claims 1 to 9; and
optionally at least partly curing the obtained mixture via a radical mechanism.

15. Use of the pressure-sensitive adhesive according to any of claims 11 to 13 for laminating a sheet or a film.

## Patentansprüche

1. Zusammensetzung für die Herstellung eines Haftklebstoffs, wobei die Zusammensetzung umfasst
a) ein reaktives ungesättigtes Polykondensat umfassend Wiederholungseinheiten, die abgeleitet sind von
a1) einem organischen Molekül mit wenigstens einer Kohlenstoff-Kohlenstoff-Doppelbindung und wenigstens zwei Carbonsäuregruppen oder Esterderivaten davon, und
a2) einem Dimer von einem Fettalkohol, und
a3) einem Disäuremonomer, und/oder einem Diestermonomer, die von Komponente a1) verschieden sind; und
b) eine nicht-reaktive Komponente ausgewählt aus
b1) einem klebrigmachenden Harz, und/oder
b2) einem Polyesterpolyol mit niedriger Tg, und/oder
b3) einem Weichmacher;
wobei das reaktive ungesättigte Polykondensat mittels eines Radikalmechanismus gehärtet werden kann.

2. Zusammensetzung nach Anspruch 1, wobei
a1) ausgewählt ist aus Itaconsäure und/oder Citraconsäure und/oder Mesaconsäure und/oder Aconitsäure, und/oder ihren jeweiligen Dialkylestern, und/oder beliebigen Mischungen davon und/oder
a2) außerdem ein Polyol enthält, und/oder
a3) ausgewählt ist aus einem Dimer von einer Fettsäure und/oder einem Dialkylester von einem Dimer von einer Fettsäure.

3. Zusammensetzung nach Anspruch 2, wobei die zum Bilden des Dimers von einer Fettsäure oder ihrem Dialkylester verwendete Fettsäure eine Linolsäure, Linolensäure, Stearidonsäure, Eicosadiensäure, Eicosatriensäure, Eicosatetraensäure, Eicosapentaensäure, Clupanodonsäure, Docosahexaensäure, Tetracosapentaensäure, Nisinsäure, Mead'sche Säure, Arachidonsäure, Adrensäure oder Calendulasäure und/oder Mischungen davon ist; wobei die Alkylgruppe in dem Dialkylester 1 bis 24 Kohlenstoffatome hat; oder wobei der Dialkylester ein Triglycerid ist.

4. Zusammensetzung nach einem der Ansprüche 1 bis 3, wobei das Dimer von einem Fettalkohol durch Hydrierung eines Dimers von einer Fettsäure erhalten wird.

5. Zusammensetzung nach einem der Ansprüche 1 bis 4, wobei die Konzentration von Komponente a) 20 bis 95 Gew.-%, bezogen auf die Zusammensetzung, beträgt.

6. Zusammensetzung nach einem der Ansprüche 1 bis 5, wobei die Konzentration von Komponente b) 5 bis 80 Gew.-%, bezogen auf die Zusammensetzung, beträgt.

7. Zusammensetzung für die Herstellung eines Haftklebstoffs, wobei die Zusammensetzung umfasst
a) ein reaktives ungesättigtes Polykondensat umfassend Wiederholungseinheiten, die abgeleitet sind von
a1) einem organischen Molekül mit wenigstens einer Kohlenstoff-Kohlenstoff-Doppelbindung und wenigstens zwei Carbonsäuregruppen oder Esterderivaten davon, und
a2) einem Diol, und
a3) einem Dimer von einer Fettsäure; und
b) eine nicht-reaktive Komponente ausgewählt aus
b1) einem klebrigmachenden Harz, und/oder
b2) einem Polyesterpolyol mit niedriger Tg, und/oder
b3) einem Weichmacher;
wobei das reaktive ungesättigte Polykondensat mittels eines Radikalmechanismus gehärtet werden kann.

8. Zusammensetzung nach einem der Ansprüche 1 bis 7, außerdem umfassend c) ein reaktives Verdünnungsmittel mit niedrigem Molekulargewicht.

9. Zusammensetzung nach einem der Ansprüche 1 bis 8, wobei das Polykondensat eine Glasübergangstemperatur (Tg) von -50 °C bis 0 °C hat.

10. Haftklebstoff umfassend die Zusammensetzung gemäß einem der Ansprüche 1 bis 9.

11. Haftklebstoff nach Anspruch 10, wobei die Zusammensetzung wenigstens teilweise mittels eines Radikalmechanismus gehärtet worden ist.

12. Haftklebstoff nach einem der Ansprüche 10 oder 11 mit einer Glasübergangstemperatur (Tg) von -50 °C bis 0 °C.

13. Haftklebstoff nach einem der Ansprüche 10 bis 12, wobei der Haftklebstoff eine Klebekraft von 20 cN/20 mm bis 2000 cN/20 mm auf Stahl bei Raumtemperatur hat.

14. Verfahren zum Herstellen eines Haftklebstoffs, umfassend:
das Vermischen der Komponenten a) und b) wie in einem der Ansprüche 1 bis 9 definiert; und
gegebenenfalls wenigstens teilweises Härten der erhaltenen Mischung mittels eines Radikalmechanismus.

15. Verwendung des Haftklebstoffs gemäß einem der Ansprüche 11 bis 13 zum Laminieren einer Folie oder eines Films.

## Revendications

1. Composition pour l'élaboration d'un adhésif sensible à la pression, la composition comprenant
a) un polycondensat insaturé réactif comprenant des motifs répétés dérivés de
a1) une molécule organique avec au moins une double liaison carbone-carbone et au moins deux groupes acide carboxylique ou dérivés ester de ceux-ci, et
a2) un dimère d'un alcool gras, et
a3) un monomère diacide, et/ou un monomère diester différent du composant a1) ; et
b) un composant non réactif choisi parmi
b1) une résine apportant du collant, et/ou
b2) un polyester polyol à faible Tg, et/ou
b3) un plastifiant ;
le polycondensat insaturé réactif étant apte à être durci par un mécanisme radicalaire.

2. Composition selon la revendication 1, dans laquelle
a1) est choisi parmi l'acide itaconique et/ou l'acide citraconique et/ou l'acide mésaconique et/ou l'acide aconitique, et/ou leurs esters dialkyliques respectifs, et/ou de quelconques mélanges de ceux-ci et/ou
a2) contient également un polyol, et/ou
a3) est choisi parmi un dimère d'un acide gras et/ou un ester dialkylique d'un dimère d'un acide gras.

3. Composition selon la revendication 2, l'acide gras utilisé pour former le dimère d'acide gras ou son ester dialkylique étant un acide linoléique, linolénique, stéaridonique, eicosadiénoïque, eicosatriénoïque, eicosatétraénoïque, eicosapentaénoïque, clupanodonique, docosahexanénoïque, tétracosapentaénoïque, nisinique, de Mead, arachidonique, adrénique ou calendique, et/ou des mélanges de ceux-ci ; le groupe alkyle dans l'ester dialkylique ayant de 1 à 24 atomes de carbone ; ou l'ester dialkylique étant un triglycéride.

4. Composition selon l'une quelconque des revendications 1 à 3, le dimère d'alcool gras étant obtenu par hydrogénation d'un dimère d'un acide gras.

5. Composition selon l'une quelconque des revendications 1 à 4, dans laquelle la concentration du composant a) est de 20 à 95 % en poids sur la base de la composition.

6. Composition selon l'une quelconque des revendications 1 à 5, dans laquelle la concentration du composant b) est de 5 à 80 % en poids sur la base de la composition.

7. Composition pour l'élaboration d'un adhésif sensible à la pression, la composition comprenant
a) un polycondensat insaturé réactif comprenant des motifs répétés dérivés de
a1) une molécule organique avec au moins une double liaison carbone-carbone et au moins deux groupes acide caroboxylique ou dérivés ester de ceux-ci, et
a2) un diol, et
a3) un dimère d'un acide gras ; et
b) un composant non réactif choisi parmi
b1) une résine apportant du collant, et/ou
b2) un polyester polyol à faible Tg, et/ou
b3) un plastifiant ;
le polycondensat insaturé réactif étant apte à être durci par un mécanisme radicalaire.

8. Composition selon l'une quelconque des revendications 1 à 7, comprenant en outre c) un diluant réactif de faible masse moléculaire.

9. Composition selon l'une quelconque des revendications 1 à 8, le polycondensat ayant une température de transition vitreuse (Tg) allant de -50 °C à 0 °C.

10. Adhésif sensible à la pression comprenant la composition selon l'une quelconque des revendications 1 à 9.

11. Adhésif sensible à la pression selon la revendication 10, la composition ayant été au moins partiellement durcie par un mécanisme radicalaire.

12. Adhésif sensible à la pression selon l'une quelconque des revendications 10 ou 11 ayant une température de transition vitreuse (Tg) allant de -50 °C à 0 °C.

13. Adhésif sensible à la pression selon l'une quelconque des revendications 10 à 12, l'adhésif sensible à la pression ayant une force d'adhérence allant de 20 cN/20 mm à 2000 cN/20 mm sur de l'acier à température ambiante.

14. Procédé d'élaboration d'un adhésif sensible à la pression, comprenant :
le mélange de composants a) et b) tels que définis dans l'une quelconque des revendications 1 à 9 ; et
éventuellement le durcissement au moins partiel du mélange obtenu par un mécanisme radicalaire.

15. Utilisation de l'adhésif sensible à la pression selon l'une quelconque des revendications 11 à 13 pour stratifier une feuille ou un film.
